(19) Europäisches Patentamt

European Patent Office

Office européen des brevets

(11) Veröffentlichungsnummer : **0 238 075 B1**

(12) **EUROPÄISCHE PATENTSCHRIFT**

(45) Veröffentlichungstag der Patentschrift :
21.08.91 Patentblatt 91/34

(51) Int. Cl.⁵ : **G10L 3/00, H04M 3/50**

(21) Anmeldenummer : **87104005.1**

(22) Anmeldetag : **18.03.87**

(54) Verfahren zur Unterscheidung von Sprachsignalen von Signalen geräuschfreier oder geräuschbehafteter Sprachpausen.

(30) Priorität : 18.03.86 DE 3609066

(43) Veröffentlichungstag der Anmeldung :
23.09.87 Patentblatt 87/39

(45) Bekanntmachung des Hinweises auf die
Patenterteilung :
21.08.91 Patentblatt 91/34

(84) Benannte Vertragsstaaten :
**AT BE CH DE ES FR GB IT LI NL SE**

(56) Entgegenhaltungen :
**EP-A- 0 092 612**
**FR-A- 2 520 539**
**US-A- 4 052 568**
**US-A- 4 351 983**
**US-A- 4 357 491**

(73) Patentinhaber : **Siemens Aktiengesellschaft**
**Wittelsbacherplatz 2**
**W-8000 München 2 (DE)**

(72) Erfinder : **Jensen, Peter-Grauer**
**Starupvej 225**
**DK-08340 Malling (DK)**

**Beschreibung**

Aus der "COMSAT TECHNICAL Review", Bd. 6, Nr. 1, Frühjahr 1976, Seiten 159 - 178, ist eine in Digitaltechnik realisierte sprachgesteuerte Schalteinrichtung zur Erkennung von Sprache und Geräusch bekannt. Die bekannte Schalteinrichtung bildet einen variablen Sprachschwellwert und einen von diesem abhängigen Geräuschschwellwert. Der Sprachschwellwert wird geändert, wenn drei aufeinanderfolgende Pegel des Sprachsignals den Sprachschwellwert überschreiten. Der Geräuschschwellwert wird geändert, wenn in einem festgelegten Zeitraum von 150 ms auftretendes Geräusch den Geräuschschwellwert mindestens eine bestimmte Zahl unter- oder überschreitet. Hierdurch ergibt sich zum einen eine lange Einschwingzeit für die Pegelregulierung, zum anderen wird die Zählung stets mit dem Auftreten von Sprache unterbrochen, also auch vor Ablauf des Zählzeitraumes, so daß die an sich notwendige Pegelregulierung unterbleibt. Bei geringem Rauschabstand und bei geringen Sprachpegeln wird Sprache nicht sicher erkannt. Dies ist insbesondere in Sprachspeichersystemen - Voice Mail - als störend anzusehen, in denen gesprochene Informationen digital verschlüsselt abgespeichert und Sprachpausen als entsprechende Pausenkennung mit einer die Länge der Pause angebenden Zeitinformation gespeichert werden. Nicht als Sprache erkannte Information wird dadurch vollständig unterdrückt.

Aus dem US-Patent 4,357,491 ist bereits ein Verfahren und eine Vorrichtung zur Erkennung von Sprache bekannt. Dabei wird das Auftreten eines Sprachsignals erkannt, wenn dieses einen von zwei Schwellwerten überschreitet. Ein erster Schwellwert ist fest in einem relativ hohen Abstand gegenüber einem erwarteten Geräuschpegel angeordnet, während ein zweiter variierbarer Schwellwert in einem relativ geringen Abstand oberhalb eines erwarteten Geräuschpegels angeordnet ist. Der Pegelschwellwert ist unabhängig von der in der Praxis vielfach variierenden Qualität der Sprachübertragung fixiert, wobei eine Spracherkennung bei geringem Geräusch- bzw. Rauschabstand von Sprachpegeln nur in eingeschränktem Umfang möglich ist.

Die Erfindung geht aus von einem Verfahren und von einer Anordnung zur Unterscheidung von Sprachsignalen geräuschfreier oder geräuschbehafteter Sprachpausen in einer Datenfolge mittels eines unter Berücksichtigung von den Sprachpausensignalen entsprechenden Sprachpausenpegeln variierbaren Pegelschwellwertes.

Der Erfindung liegt die Aufgabe zugrunde, dieses Verfahren und eine Anordnung zur Durchführung dieses Verfahrens derart auszugestalten, daß die sichere Erkennung von Sprache und Sprachpausen relativ kurz nach ihrem Auftreten und auch bei geringem Geräusch bzw. Rauschabstand von Sprachpegeln ermöglicht ist.

Die wird erfindungsgemäß mit den kennzeichnenden Merkmalen des Patentanspruchs 1 erreicht.

Der mit dem erfindungsgemäßen Verfahren erzielte Vorteil liegt insbesondere darin, daß der zwischen Geräuschpegel und Sprachpegel liegende Pegelschwellwert sich den Pegelverhältnissen auf der Leitung, das heißt den absoluten Pegelwerten bei der Übertragung von Sprache und in Sprachpausen als auch dem Abstand dieser Pegel voneinander anpaßt. Wesentliche Voraussetzungen hierfür sind die Registrierung der Spitzenwerte und der Niedrigwerte der aufgenommenen Pegel. Durch die einerseits sofortige Übernahme eines eine bisherige Aufnahmeschwelle überschreitenden Spitzenwertes bzw. unterschreitenden Niedrigwertes und die andererseits allmähliche Absenkung bzw. Anhebung dieser Aufnahmeschwellen wird über verhältnismäßig lange Zeiträume der jeweils maximale auftretende Pegel des Signals festgehalten ; kurzfristige Sprachpausen zwischen aufeinarderfolgenden Wörtern oder Sätzen ändern daher den Wert der Spitzenwert-Aufnahmeschwelle kaum, während andererseits - insbesondere bei Vorsehen einer noch längeren Zeitkonstante - der Wert der Niedrigwert-Aufnahmeschwelle, auch während der Zeit in der Wörter gesprochen werden, kaum ansteigt. Die Niedrigwert-Aufnahmeschwelle stellt somit eine gute Annäherung an den Geräuschpegel in Sprachpausen dar.

An sich wären beide Schwellwerte jeweils isoliert für sich genommen als Ausgangsgröße für die Bestimmung eines Pegelschwellwertes heranzuziehen. Beispielsweise könnte die jeweils aktuelle Niedrigwert-Aufnahmeschwelle um einen konstanten Faktor erhöht werden oder die aktuelle Spitzenwert-Aufnahmeschwelle um einen bestimmten Betrag verringert werden ; beide Methoden würden zur Festlegung eines entweder mit dem Geräuschpegel oder dem Sprachpegel variierenden Pegelschwellwertes führen. Beide Pegelschwellwerte wären jedoch im Hinblick auf die in der Praxis auftretenden, stark unterschiedlichen Pegelverhältnisse, die insbesondere durch die Vielzahl unterschiedlicher Leitungsverbindungen bedingt sind, als nur sehr unvollkommene Trennschwellen zwischen Sprache und Geräusch anzusehen. Legt man z. B. den Pegelschwellwert nur verhältnismäßig geringfügig - 6 dB - über den Niedrigwert-Aufnahmeschwellwert, um bei Sprache mit wenig Dynamik bzw. bei stark geräuschbehafteter Sprache eine einigermaßen sichere Unterscheidung zwischen Sprache und Geräuschen vornehmen zu können, so begibt man sich des Vorteils, bei Sprachinformationen mit höherer Dynamik bzw. mit sehr großem Geräuschabstand den Pegelschwellwert anzuheben um damit eine bessere Immunität gegenüber den störenden Geräuschen zu erhalten. Geht man andererseits von der Spitzenwert-Aufnahmeschwelle aus und verringert zur Bildung des Pegelschwellwertes den aktuellen Spitzenwert-Aufnahmeschwellenwert deutlich - beispielsweise um 12 dB - so kann bei Sprachinformationen geringer Dynamik bzw. mit geringem Geräuschabstand fälschlicherweise auch Geräuschpegel als auch Sprachinformationen zurückzuführend interpretiert werden.

Diese Nachteile werden auf überraschend einfache Weise durch das erfindungsgemäße Verfahren vermieden. Durch Berücksichtigung der jeweils aktuellen Werte der Spitzenwert-Aufnahmeschwelle und der Niedrigwert-Aufnahmeschwelle für die Bildung des Pegelschwellwertes nach der im Rahmen der Erfindung vorgesehenen Regel ergibt sich, daß bei guter Qualität der Sprachübertragung und damit hohen Sprachpegeln und hoher Dynamik der Pegelschwellwert nahezu allein von der Spitzenwert-Aufnahmeschwelle, dagegen bei schlechter Qualität der Sprachübertragung und damit verbunden niedrigen Pegeln, viel Geräusch und geringer Dynamik zumindest überwiegend von der Niedrigwert-Aufnahmeschwelle bestimmt wird.

Dabei sieht die Erfindung in diesem Zusammenhang vor, daß die Pegelregulierungswerte zur Bildung des Pegelschwellwertes miteinander addiert werden. Liegt beispielsweise der von der Spitzenwertaufnahmeschwelle abgeleitete Pegelregulierungswert 30 dB über dem von der Niedrigwert-Aufnahmeschwelle abgeleiteten Pegelregulierungswert, so ergibt eine Addition einen nahezu mit dem ersten dieser beiden Pegelregulierungswerte identischen Wert. Je dichter der kleinere Pegelregulierungswert am größeren der beiden Pegelregulierungswerte liegt, desto deutlicher liegt der Pegelschwellwert über dem größeren der beiden Pegelregulierungswerte.

Eine vorteilhafte Weiterbildung der Erfindung basiert auf diesem Zusammenhang und sieht vor, daß bei Unterschreiten eines vorgegebenen Abstandswertes zwischen den beiden Pegelregulierungswerten der größere der beiden Pegelregulierungswerte als Pegelschwellwert benutzt wird.

Darüber hinaus ist generell denkbar die Pegelregulierungswerte derart zur Bildung des Pegelschwellwertes zu benutzen, daß generell der größere der beiden Pegelregulierungswerte als Pegelschwellwert benutzt wird.

Im Zusammenhang mit der im Rahmen der Erfindung vorgesehenen allmählichen Absenkung der Spitzenwert-Aufnahmeschwelle und der allmählichen Anhebung der Niedrigwert-Aufnahmeschwelle wird gemäß einer vorteilhaften Weiterbildung der Erfindung vorgesehen, daß die Zeitkonstante für die Absenkung der Spitzenwert-Aufnaheschwelle wenige Sekunden, vorzugsweise 3 Sekunden bis 5 Sekunden, und die Zeitkonstante für die Anhebung der Niedrigwert-Aufnahmeschwelle ein mehrfaches, vorzugsweise etwa das sechs- bis zwölffache beträgt. Dadurch wird einerseits erreicht, daß kurzzeitige Sprachpausen zwischen Wörtern und Sätzen die Spitzenwert-Aufnahmeschwelle kaum verändern und daß andererseits die Niedrigwert-Aufnahmeschwelle während der Zeit, in der Wörter gesprochen werden, kaum ansteigt. Damit sind bezüglich der Veränderungen der beiden Aufnahmeschwellwerte praxisgerechte günstige Verhältnisse gewährleistet.

Weitere vorteilhafte Ausgestaltungen der Erfindung betreffen eine Anordnung zur Durchführung des erfindungsgemäßen Verfahrens in all seinen Varianten. Die besonderen Eigenschaften und Vorteile dieser Anordnung bzw. ihrer Komponenten und Konfigurattonen ergeben sich anhand eines in 4 Figuren dargestellten Ausführungsbetspiels bzw. der dazugehörigen Beschreibung.

Es zeigt :

FIG 1 ein vereinfachtes Blockschaltbild einer Nebenstellenanlage, die mit einer Einheit zur Erkennung und Abspeicherung von Sprachinformationen gekoppelt ist, bei der das erfindungsgemäße Verfahren zur Anwendung kommt,

FIG 2 ein Blockschaltbild einer Spracherkennungseinrichtung zur Durchführung des erfindungsgemäßen Verfahens,

FIG 3 ein Blockschaltbild einer Spitzenwertextraktionseinrichtung,

FIG 4 ein Blockschaltbild einer Niedrigwertextraktionseinrichtung.

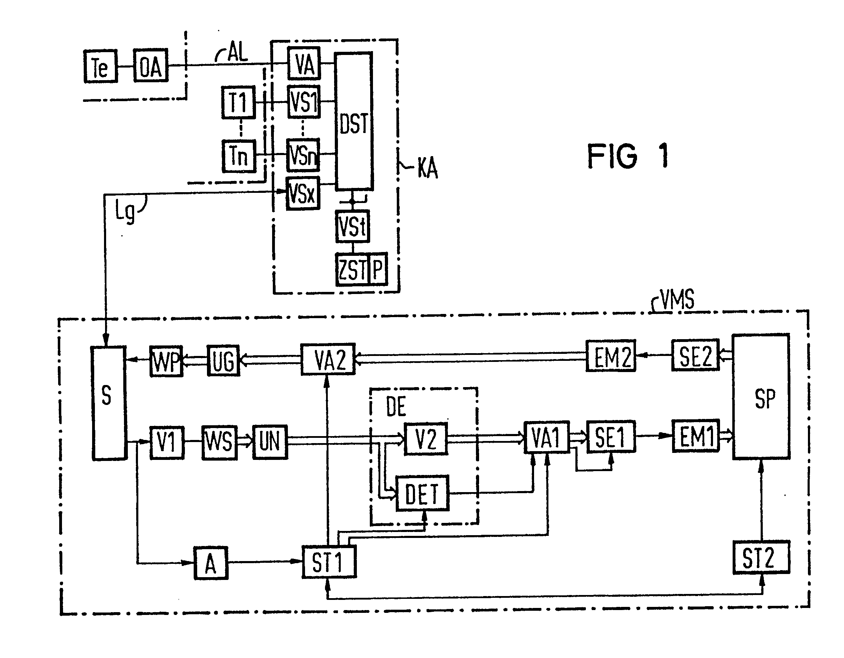

FIG 1 zeigt ein vereinfachtes Blockschaltbild einer Kommunikationsnebenstellenanlage KA, die beispielsweise eine rechnergesteuerte, speicherprogrammierte Vermittlungsanlage sein kann. Eine zentrale Steuereinrichtung ZST steuert im wesentlichen die für die einzelnen Betriebsmöglichkeiten der Anlage erforderlichen Abläufe. Dabei greift sie auf entsprechende Programmteile zurück, die in einer ihr zugeordneten Speichereinrichtung P abgespeichert sind. Mit VST ist eine Verteilersteuerung und mit DST eine dezentrale Steuerung, der jeweils eine bestimmte Anzahl von Einrichtungen, wie beispielsweise Teilnehmerstellen T1 bis Tn zugeordnet sind, bezeichnet. Unter der Voraussetzung eines digitalen Vermittlungssystems ist diese dezentrale Teilsteuerung DST funktionsmäßig ein rechnergesteuerter Speicherbereich, in den die digitalen Sprachsignale eingespeichert und zum jeweiligen Verbindungspartner ausgelesen werden. Sie stellt also das digitale Koppelnetz dar. Eine spezielle Verteiler- und Anpassungssteuerung VSt ist mehreren dezentralen Teilsteuerungen DST, an die jeweils Sätze angekoppelt sind, zugeordnet. So erfolgt beispielsweise die Anschaltung der Teilnehmerstellen T1 bis Tn über die sätze VS1 bis VSn. Über ein Amtsleitungsbündel bzw. über eine Amtsleitung AL ist die Nebenstellenanlage KA mit einer externen Anlage, beispielsweise mit einer Vermittlungsanlage OA des öffentlichen Netzes verbunden. stellvertretend für die daran angeschlossenen Endgeräte ist als Endgerät die Teilnehmerstelle Te dargestellt. Der weiterführenden Leitung AL bzw. dem weiterführenden Leitungsbündel ist ein Vermittlungssatz VA zugeordnet. Die dargestellten Vermittlungssätze VA, VS1...VSn, VSx der Nebenstellenanlage KA können als aktive Sätze ausgebildet sein, die einen Prozessor beinhalten. Dieser verarbeitet Informationen vor, die z.B. von den in einem Teilnehmersatz enthaltenen Indikationsstellen geliefert werden. Es kann beispielsweise vorgesehen sein, daß neben den im Regelfall vorgesehenen digitalen Endeinrichtungen auch analoge Endeinrichtungen über entsprechend ausgebildete Sätze angeschlossen sind. Es können also sowohl über eine Amtsleitung AL als auch über eine Teilnehmeranschlußleitung Verbindungen vermittelt werden, denen analoge Sprachinformationen zugrundeliegen. Es ist vorgesehen, daß sowohl in digitaler Form übermittelte Sprachinformationen als auch solche, die als analoge Sprachinformationen übermittelt werden, in einem über einen entsprechenden Satz VSx an die Vermittlungsanlage KA angeschlossenen Sprachspeichersystem VMS verarbeitet werden. In einer Speichereinrichtung SP des Sprachspeichersystems VMS werden an einen bestimmten Teilnehmer gerichtete sprachinformationen abgespeichert. Dieser Teilnehmer hat dann die Möglichkeit, die Informationen gezielt abzufragen.

Sowohl beim Erstellen einer Nachricht als auch beim Abhören derselben stehen dem Teilnehmer verschiedene Bedienfunktionen zur Verfügung. Hierzu gehören beispielsweise Start/Stop der Ein- bzw. Ausgabe, Wiederholung der Nachricht, Vorlauf/ Rücklauf, das Löschen und Ändern einer Nachricht.

Sprachinformationen können auch durch weitere Informationen, wie beispielsweise die Identität des Absenders, den Zeitpunkt des Absendens usw. ergänzt sein. Sind im Speicher SP Nachrichten für einen Teilnehmer eingetroffen, so kann ihm dies signalisiert werden. Für die neue zeitversetzte Art der Kommunikation, die eine zentrale Sprachspeicherung und die verwaltete Übermittlung der Sprachinformationen ermöglicht, kann als Endgerät der vorhandene Fernsprechapparat verwendet werden. Der Teilnehmer signalisiert seine Bedienwünsche durch Betätigen des Gabelkontaktes und der Wählvorrichtung. In umgekehrter Richtung kann er Wecker- und Ruftöne sowie aus einem entsprechenden Speicher entnommene gesprochene Anweisungen erhalten. Zur Beanspruchung der einzelnen Funktionen des Sprachspeichersystems VMS wählt also der Teilnehmer, der eine Sprachmitteilung für einen anderen Teilnehmer einspeichert, bestimmte Ziffern oder Ziffernkombinationen ein. Aufgrund dieser Steuerinformationen wird dann der jeweils zugeordnete Funktionsablauf veranlaßt.

Die ankommenden Sprachinformationen, die gegebenenfalls durch geräuschfreie oder geräuschbehaftete Pausen unterbrochen sind, können in der Weise vorbearbeitet sein, daß sie über die Leitungsverbindung Lg als PCM-codierte Signalfolgen anliegen und über die Schnittstelle S weitergegeben werden. Eventuell an der Schnittstelle S eintreffende analoge Sprachinformations-signale, die ebenfalls durch geräuschfreie oder geräuschbehaftete Pausen unterbrochen sein können, werden abgetastet und pulscodemoduliert.

Alle an der Schnittstelle S eintreffenden Signalfolgen werden einer Auswerteeinheit A zugeführt. Diese Einheit erkennt Steuerinformationen, die Teilnehmer zur Signalisierung ihrer Bedienwünsche in den Informationsfluß einfügen. Derartige Steuerinformationen werden beispielsweise als im sogenannten Mehrfrequenzverfahren abgegebene MFV-Zeichen übermittelt. Das jeweilige Auswerteergebnis wird einer ersten Steuereinheit ST1 übermittelt, die ihrerseits mit der die Einspeichervorgänge steuernden zweiten Steuereinheit ST2 im Informationsaustausch steht.

Alle an der Schnittstelle S eintreffenden Signalfolgen werden ebenso einer ersten Verzögerungseinrichtung V1 zugeführt, die die Signalfolgen um eine bestimmte Verzögerungszeit verzögert. Die Verzögerungszeit ist so bemessen, daß sie mindestens diejenige Zeitspanne umfaßt, in der die Auswerteeinheit A eine Steuerinformation erkennt.

Die ursprünglich in serieller Form ausgebildeten Signalfolgen werden einer Seriell/Parallelwandlungseinrichtung WS zugeführt und in paralleler Form ausgegeben.

Die Verbindung mit den nachfolgenden Einheiten erfolgt über Leitungsanordnungen, die aus einer Anzahl Einzelleitungen bestehen, die der Bit-Breite der einzelnen Signalfolgewerte entspricht. Derartige Leitungsanordnungen sind in der FIG 1 schematisch durch parallele Doppellinien dargestellt.

Für die Weiterverarbeitung werden die von der Einrichtung WS abgegebenen digitalen Informationen, die mittels einer nichtlinearen, im Regelfall logarithmischen Kennlinie gebildet werden, in aus einer linearen Kennlinie abgeleitete Informationen umgesetzt. Dies erfolgt durch die Einrichtung UN. Die von ihr abgegebene digitale Datenfolge wird einer Einrichtung DE zugeführt, die aus einer zweiten Verzögerungseinrichtung V2 und aus einer Detektor-Einrichtung DET besteht, in der, wie später noch erläutert wird, die Erkennnung von Sprachinformationen und Sprachpausen gemäß dem erfindungsgemäßen Verfahren erfolgt.

In der der Einrichtung DE nachgeschalteten Verarbeitungseinrichtung VA1 werden die Sprachinformationen komprimiert, beispielsweise nach dem sogenannten adaptiven Differenz-PCM-Verfahren (ADPCM). Dabei wird grundsätzlich nur die Differenz zweier aufeinanderfolgender Abtastwerte codiert, so daß weniger Binärwertzeichen als bei einer normalen Codierung erzeugt werden. Eine weitere Bitratenreduzierung wird erreicht, indem weiterhin die Quantisierungsstufen dynamisch dem jeweiligen Durchschnittspegel angepaßt werden. Die dabei entstehenden Daten werden zusätzlich noch zu bei der Pulscodemodulation üblichen PCM-Worten von beispielsweise 8 Bit Breite verpackt.

Durch Codierung der erfindungsgemäß in der Einrichtung DET erkannten Sprachpausen wird eine weitere Reduzierung des Speicherbedarfs für die Abspeicherung der relevanten Datenfolgeteile erreicht. Sprachpausen beliebiger Länge sind eindeutig darstellbar durch eine die Sprachpause per se kennzeichnende Information und durch eine die Pausenlänge kennzeichnende Information. Die Sprachpausencodierung wird ebenfalls von der Verarbeitungseinheit VA1 durchgeführt. Bei Zuführung einer den Beginn einer Sprachpause kennzeichnenden Information von der Einrichtung DET löst die Verarbeitungseinrichtung VA1 die Zeitmessung der Pausenlänge aus und unterbricht den Zeitmeßvorgang, sobald ihr durch zugeführte Sprachinformationen bzw. durch ein besonderes Spracherkennungssignal das Pausenende signalisiert wird.

Die Komprimierung der Sprachinformationen und die bei der Codierung der Sprachpausen entstehenden Daten ergeben keinen kontinuierlichen Nutzdatenstrom. Die von der Verarbeitungseinrichtung VA1 gelieferten verarbeitungsergebnisse werden asynchron zu der Speichereinheit SP über eine vorgeschaltete Sendeeinheit SE1 und eine Empfangseinheit EM1 übertragen.

In der Sendeeinheit SE1 wird das beispielsweise nach der beschriebenen Verpackung der reduzierten Abtastwerte entstandene Wort zu einem neuen Informationswort in der Weise zusammengefaßt, daß an den Anfang des Informationswortes ein Startbit und an das Ende Stopbits gesetzt werden. Ein solches vorangestelltes Startbit kann belspielsweise als binäre '0' und ein Stopbit als binäre '1' definiert sein.

Es kann beispielsweise vorgesehen sein, daß insgesamt sieben Stopbits in einem Wortformat von 16 Bit ausgesendet werden. In Zeiten, in denen keine Nutzdaten vorhanden sind, werden genügend Stopbits ausgesendet, um eine bestimmte Datenrate, beispielsweise 64 kBit/s, beizubehalten. Die Sendeeinheit SE1 wandelt außerdem die parallele Datenfolge in die serielle Darstellungsform zurück,

Die Empfangseinrichtung EM1 erkennt die ihr im Byterahmen zugeführten Worte und löst durch das Startbit am jeweiligen Wortanfang die Abspeicherung der eigentlichen Nutzdaten in die Speichereinrichtung SP aus.

Zur Ausspeicherung einer Sprachnachricht aus der Speichereinrichtung SP werden von dem hierzu berechtigten Teilnehmer zunächst Steuerinformationen übermittelt. Aufgrund von eingewählten Kennzahlen kann sich der betreffende Teilnehmer gegenüber dem Sprachspeichersystem VMS als berechtigt ausweisen oder er kann den Wunsch nach Wiederholung einer Nachricht signalisieren. Diese Steuerinformationen werden von der Einrichtung A ausgewertet und führen über die Einheit ST1 zu entsprechenden Informationen für die zweite Steuereinheit ST2.

In gleicher Weise, wie dies für den Einspeicherweg geschildert wurde, ist im Ausspeicherungszweig eine Sendeeinheit SE2 und eine Empfangseinheit EM2 angeordnet. Ihr Aufbau entspricht grundsätzlich dem für die Sendeeinheit SE1 und für die Empfangseinheit EM1 dargestellten Aufbau. Die abzugebenden Nutzinformationen werden für die Ubertragung zu der Empfangseinheit EM2 in der Sendeeinheit SE2 gleichfalls durch ein Startbit und durch Stopbits ergänzt. Die Nutzinformationen werden von der Speichereinrichtung SP zu der Einheit EM2 asynchron übertragen.

Jeder Byterahmen wird von der Verarbeitungseinheit VA2 durch Aussenden eines besonderen Anforderungssignals aus der Speichereinrichtung SP angefordert. Das Zeitminimum zwischen zwei derartigen Anforderungssignalen entspricht wegen der zu verarbeitenden 16 Bit-Wortbreite 16 Taktzeiten. In der Verarbeitungseinheit VA2 werden die in komprimierter Form dargestellten und in 8 Bit-paralleler Darstellung angebotenen Daten in standardgemäße PCM-Informationen umgewandelt.

In einem Umsetzgenerator UG wird eine Umsetzung der aufgrund einer linearen Kennlinie gebildeten digitalen Informationen in Informationen vorgenommen, denen eine logarithmische Kennlinie zugrundegelegt wird. Eine Einrichtung WP wandelt die ihr in paralleler Form zugeführten digitalen Informationen in serielle Form um. Die umgewandelten Informationen werden über die Schnittstelle S unter Einbeziehung der Vermittlungsanlage KA zu einer Teilnehmerstelle T1...Tn übertragen.

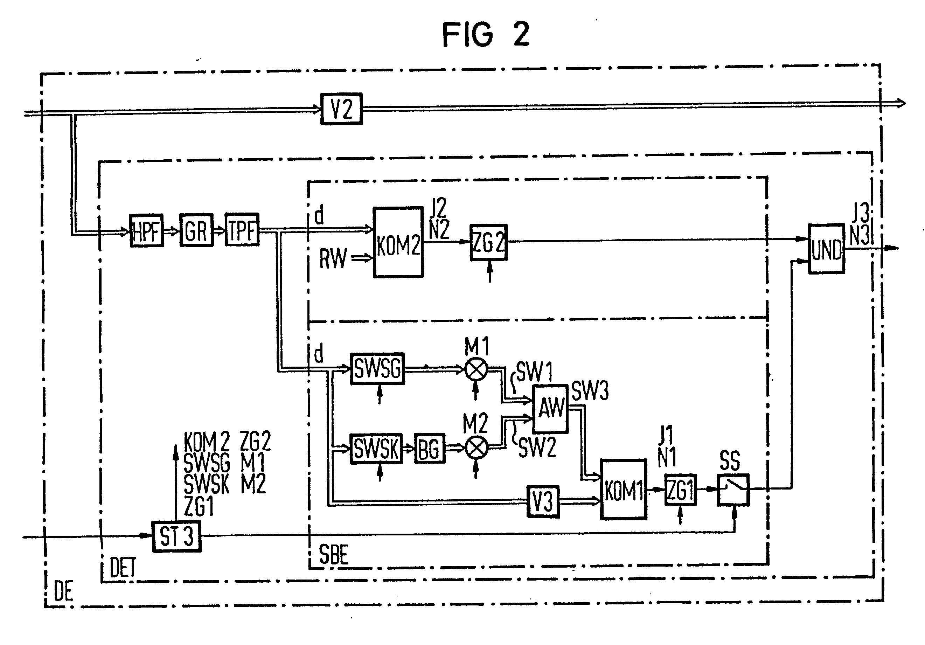

In FIG 2 ist die aus der Detektoreinrichtung DET und der zweiten Verzögerungseinrichtung V2 bestehende Einrichtung DE dargestellt.

Eine Datenfolge d, die sowohl Sprachinformationen als auch geräuschfreie oder geräuschbehaftete Sprachpausen in Form von Abtastwerten enthalten kann, wird der zweiten Verzögerungseinrichtung V2 und der parallel zu ihr angeordneten Detektor-Einrichtung DET zugeführt.

Die Detektor-Einrichtung DET weist eingangsseitig drei hinter-einandergeschaltete Einrichtungen HPF, GR und TPF auf.

Die Einrichtung HPF ist als Hochpaßfilter, beispielsweise 8. Ordnung ausgebildet. Ein derartiges Filter kann durch vier hintergeschaltete Filterstufen 2. Ordnung mit komplexkonjungierten Pol- und Nuttstellen gebildet werden. Insbesondere kann die Einrichtung HPF Frequenzanteile unter 500 Hertz stark, dagegen Frequenzanteile über 600 Hertz nur geringfügig, dämpfen.

Die Einrichtung GR ist als Gleichrichteranordnung ausgebildet, die ein einen positiven Signalwert charakterisierendes Bit nicht verändert, während negative Signalwerte charakterisierende Bits in entsprechende Bits für positive Signalwerte umgewandelt werden.

Nach dieser Vorzeichenumsetzung werden die Informationen der als Tiefpaßfilter ausgebildeten Einrichtung TPF zugeführt, die beispielsweise als rekursiver Tiefpaß ausgebildet ist. Im Ausführungsbeispiel enthält dieser für sich bekannte Tiefpaß einen Addierer, der an seinem Ausgang eine gemittelte Größe abgibt. Insbesondere werden Frequenzanteile über 3400 Hertz ausgeblendet.

Die in dieser Weise vorverarbeitete, bandbegrenzte Datenfotge d wird der in der Detektor-Einrichtung DET enthaltenen Schwellwertbildungseinrichtung SBE zugeführt.

Die Schwellwertbildungseinrichtung SBE besteht aus einer Spitzenwertextraktionseinrichtung SWSG und einer zu dieser parallel angeordneten Niedrigwertextraktionseinrichtung SWSK, der eine Pegelbegrenzungseinrichtung BG sowie eine zweite Multiplikationseinrichtung M2 nachgeschaltet ist. Der Spitzenwertextraktionseinrichtung SWSG ist eine erste Multiplikationseinrichtung M1 nachgeschaltet. Ausgangsseitig führen beide Muttiplikationseinrichtungen M1 und M2 auf zwei Eingänge einer als Addierwerk ausgebildeten Verknüpfungseinrichtung AW. Eine Vergleichseinrichtung KOM1 ist eingangsseitig mit der Verknüpfungseinrichtung AW und mit einer dritten Verzögerungseinrichtung V3 verbunden, die im betrachteten Zusammenhang aber auch entfallen könnte, bzw. eine gegen "0" tendierende Verzögerungszeit aufweisen könnte. Der Vergleichseinrichtung KOM1 ist ein erstes Zeitglied ZG1 sowie ein von einer dritten Steuerungseinrichtung ST3 der Detektor-Einrichtung DET steuerbarer Schalter SS nachgeschaltet.

Die Spizenwertextraktionseinrichtung SWSG und die Niedriwertextraktionseinrichtung SWSK sind unabhängig voneinander arbeitende Einrichtungen, die gemeinsam zur Bildung eines als Trennlinie zwischen Sprachinformation und Geräusch definierten Pegelschwellwertes SW3 ausgenutzt sind.

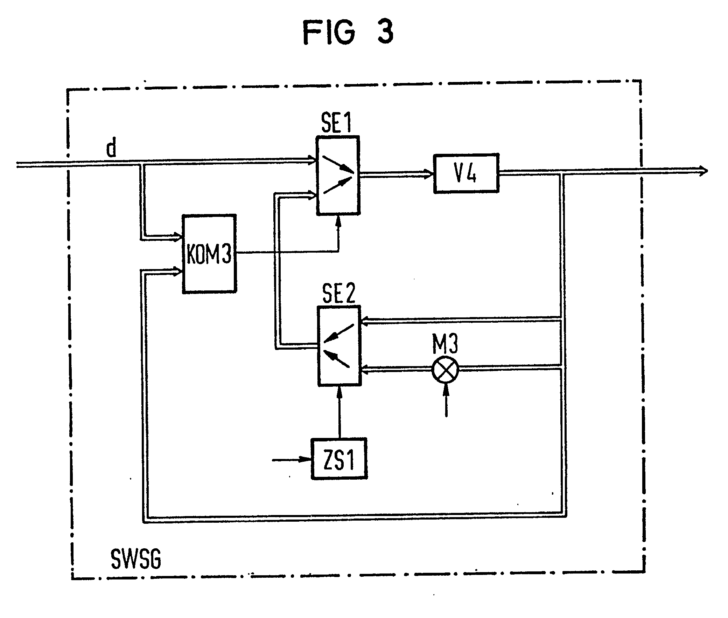

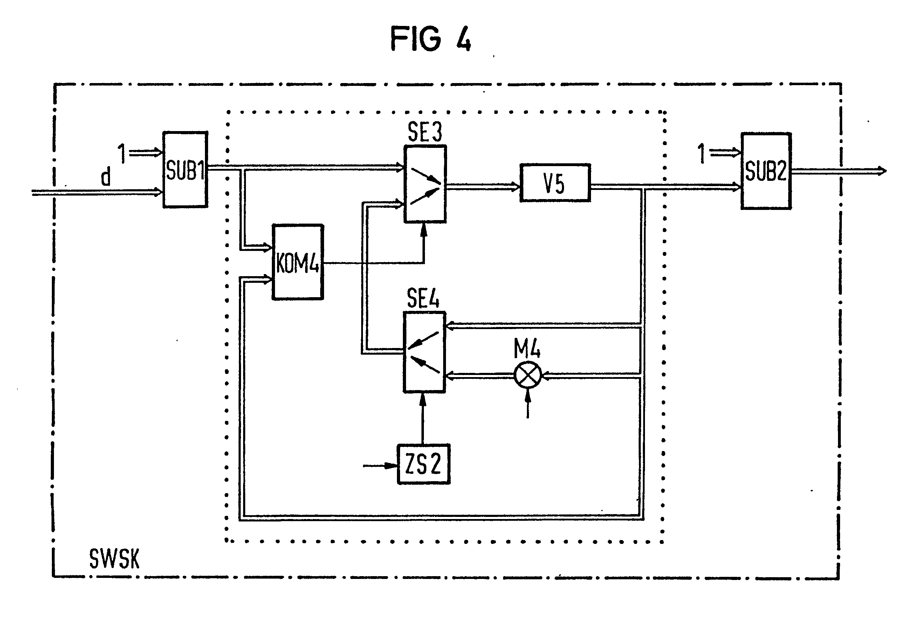

Bei Verfahrensbeginn wird der Spitzenwertextraktionseinrichtung SWSG, die anhand von FIG 3 und der Niedrigwertextraktionseinrichtung SWSK, die anhand von FIG 4 noch detailliert beschrieben wird, der momentane Pegelwert der Datenfolge d zugeführt.

Innerhalb weniger Abtastperioden, d.h. bereits nach etwa einigen Millisekunden wird die Einstellung eines brauchbaren Pegelschwellwertes erreicht.

Die Wirkungsweise der Spitzenwertextraktionseinrichtung SWSG und der Niedrigwertextraktionseinrichtung SWSK bzw. die Gewinnung von zwei Pegelregulierungswerten, aus denen der Pegelschwellwert gebildet wird ist prinzipiell folgendermaßen :

Nach Abspeicherung des ersten auftretenden Pegelwertes in beiden Extraktionseinrichtungen SWSG, SWSK wird jeder nachfolgende Pegelwert der Datenfolge d daraufhin untersucht, ob er — für die Spitzenwertextraktionseinrichtung SWSG — größer bzw. — für die Niedrigwertextraktionseinrichtung — kleiner als der bisher gespeicherte Pegelwert ist. Ist dies der Fall so wird von der Spitzenwertextraktionseinrichtung SWSG dieser größere Pegelwert, bzw. von der Niedrigwert-Extraktionseinrichtung SWSK dieser niedrigere Pegelwert übernommen. Vom Moment der Übernahme eines neuen Spitzenwertes bzw. eines neuen Niedrigwertes werden die dadurch neu gebildeten Aufnahmeschwellen allmählich abgesenkt bzw. erhöht bis ein entsprechender neuer Pegelwert die Spitzenwert-Aufnahmeschwelle überschreitet bzw. die Niedrigwert-Aufnahmeschwelle unterschreitet. Die Methode der verzögerten Veränderung der Aufnahmeschwellen wird für die Spitzenwert-Extraktionseinrichtung SWSG später anhand der FIG 3 und für die Niedrigwert-Extraktionseinrichtung SWSK später anhand der FIG 4 erläutert. Die der Spitzenwertextraktionseinrichtung SWSG nachgeschaltete Multiplikationseinrichtung M1 kann bezüglich eines Multiplikationsfaktors so eingestellt sein, daß beispielsweise Jede von der Spitzenwertextraktionseinrichtung SWSG gelieferte momentane Spitzenwert-Aufnahmeschwelle um etwa 12 dB erniedrigt wird. In ähnlicher Weise wird durch die Multiplikationseinrichtung M2 erreicht, daß der von der Niedrigwertextraktionseinrichtung SWSK gelieferte Niedrigwert-Aufnahmeschwellwert beispielsweise um 6 dB erhöht wird. Am Ausgang der beiden Multiplikationseinrichtungen M1, M2 sind damit die beiden Pegelregulierungswerte SW1, SW2 gebildet, die mittels des nachgeschalteten Addierwerks AW addiert werden. Als Ergebnis dieser Addition liegt der Pegelschwellwert SW3 vor, der zwischen dem Geräuschpegel und dem Sprachinformationspegel liegt und in seiner Lage in diesem Bereich permanent in Abhängigkeit vom Geräuschpegel und vom Sprachpegel variiert wird. Die Multiplikationsfaktoren der Multiplikationseinrichtungen M1, M2 werdem mittels der dritten Steuerungseinrichtung ST3 eingestellt. Eine Veränderung der Multiplikationsfaktoren, beispielsweise im Sinne einer Anpassung an bestimmte vorherrschende Leitungsverhältnisse - z.B. stark geräuschbehaftet - ist jederzeit leicht möglich.

Die Pegelbegrenzungseinrichtung BG verhindert, daß die allmähliche Anhebung der Niedrigwert-Aufnahmeschwelle bis zum Auftreten von den momentanen Aufnahmeschwellwert unterschreitenden Pegelwerten im Falle von langanhaltenden Dauertönen — also dem entsprechend langen Ausbleiben niedrigerer Pegelwerte —zu unzulässig bzw. wenigstens unnötig hohen Pegelregulierungswerten führt.

In der Vergleichseinrichtung KOM1 wird der durch die Verknüpfung der Pegelregulierungswerte SW1, SW2 gebildete Pegelschwellwert SW3 mit den Pegeln der Datenfolge d, verglichen :

In Zeiten, in denen die Pegelwerte der Datenfolge d mindestens den momentanen Pegelschwellwert SW3 aufweisen, werden ausgangsseitig Spracherkennungssignale J1, beispielsweise in Form einer aus Signalelementen "1" bestehenden Signalelementfolge, abgegeben ; in Zeiten, in denen die Pegelwerte der Datenfolge d den momentanen Pegelschwellwert SW3 unterschreiten, werden ausgangsseitig Pausenerkennungssignal N1, beispielsweise in Form einer aus Signalelementen "0" bestehenden Signalelementfolge, abgegeben.

Das der Vergleichseinrichtung KOM1 nachgeschaltete Zeitglied ZG1 verlängert die Spracherkennungssignale J1 um einen bestimmten Zeitraum von beispielsweise 500 Millisekunden, um bis in den Geräuschpegel hinein abklingende Sprachbestandteile nicht zu unterdrücken.

Die durch die Einrichtungen HPF, GR und TPF vorverarbeitete, bandbegrenzte Datenfolge d wird auch der parallel zur Schwellwertbildungseinrichtung SBE angeordneten zweiten Vergleichseinrichtung KOM2 zugeführt. Der Vergleichseinrichtung KOM2 wird außerdem ein konstanter Referenzwert RW zugeführt, der so gewählt wird, daß er voraussichtlich die Erkennung von Sprachinformationen und Sprachpausen erlaubt. Mit dem dadurch möglichen Vergleich des momentanen Pegels mit einem verhältnismäßig niedrigen - nur unwesentlich größer als ein größerer Geräuschpegel - Pegelwert können störende Nebensprecheffekte unterbunden werden. Die Einrichtung KOM2 wird bei erkanntem Sprachbeginn jeweils für eine bestimmte Zeit, beispielsweise acht Sekunden, aktiviert. Nach Ablauf dieser Zeit wird die Einrichtung deaktiviert, sofern nicht ein weiterer Sprachbeginn oder die Fortsetzung gesprochener Informationen erkannt wird. Mittels Nebensprechen ermöglichtes Mithören auf anderen Leitungen wird daher nach maximal 8 sec unterbunden.

Unterschreiten Datenfolgepegel d den zweiten Referenzwert RW, so gibt die Vergleichseinrichtung KOM2 ausgangsseitig zweite Pausenerkennungssignale N2 ab, beispielsweise in Form von aus Signalelementen "0" bestehenden Signalelementfolgen ; andernfalls gibt sie zweite Spracherkennungssignale J2, beispielsweise in Form von aus Signalelementen "1" bestehenden Signalelementfolgen ab. Diese die Erkennung von Sprachinformationen kennzeichnenden Signalelementfolgen werden durch das nachgeschaltete Zeitglied ZG1 um einen bestimmten Zeitraum verlängert, um wie schon im Zusammenhang mit dem Zeitglied ZG1 erläutert wurde, das Ausklingen von Sprachbestandteilen zu erhalten.

Die ersten und zweiten Spracherkennungssignale J1 und J2 und die ersten und zweiten Pausenerkennungssignale N1 und N2 werden einem UND-Gatter UND zugeführt, das ausgangsseitig dritte Spracherkennungssignale J3 oder dritte Pausenerkennungssignale N3 abgibt.

Die zu der Detektoreinrichtung DET parallel geschaltete Verzögerungseinrichtung V2 bildet eine Verzögerungszeit, die die Einschwingzeiten des Filterteils überbrückt und eine 'sanfte' Einleitung von Sprachbestandteilen ermöglicht.

FIG 3 zeigt ein Blockschaltbild der Spitzenwertextraktionseinrichtung SWSG. Diese besteht aus einer Vergleichsschaltung KOM3, einer ersten Selektorschaltung SE1, einer Verzögerungsstufe V4, einer zweiten Selektorschaltung SE2, einer dritten Multiplikationseinrichtung M3 sowie einer ersten Zeitsteuerung ZS1. Die im Sinne einer Glättung vorverarbeitete Datenfolge d wird der Vergleichsschaltung KOM3 zugeführt und dort mit der durch die Verzögerungsstufe V4 verzögerten Datenfolge verglichen. Die durch die Verzögerungsstufe V4 gebildete Verzögerungszeit entspricht der einer Abtastperiode. Übersteigen nun die Pegel der zugeführten Datenfolge d den am Ausgang der Multiplikationseinrichtung M3 gebildeten Pegelwert (momentane Spitzenwert-Aufnahmeschwelle) so steuert die Vergleichseinrichtung KOM3 die erste Selektorschaltung SE1 in der Weise, daß diese den größeren Pegelwert übernimmt. Im anderen Fall wird der der ersten Selektorschaltung SE1 von der zweiten Selektorschaltung SE2 zugeführte Wert übernommen.

Der Multiplikationsfaktor der Multiplikationseinrichtung M3 wird durch die in FIG 2 dargestellte Steuerungseinrichtung ST3 eingestellt und weist einen Wert geringfügig kleiner als 1, beispielsweise 0,99, auf. Mit der Zeitsteuerung ZS1 werden die Zeiträume bestimmt, in denen der geringfügig verringerte Aufnahmeschwellwert von der Selektoreinrichtung SE2 übernommen wird. Beispielsweise kann jeweils innerhalb von 128 Abtasteinheiten nur einmal der kleinere Wert übernommen werden. Der zeitliche Verlauf bzw. die Zeitkonstante der Absenkung der Spitzenwert-Aufnahmeschwelle werden also sowohl durch den Multiplikationsfaktor als auch durch die mittels der Zeitsteuerung beeinflußbare Übernahmerate bestimmt.

Die Niedrigwertextraktionseinrichtung SWSK könnte in gleicher Weise wie die Spitzenwertextraktionseinrichtung SWSG aufgebaut sein, wobei die Vergleichsschaltung SE1 den kleineren der beiden an ihrem Eingang zugeführten Werte übernähme und die Multiplikationseinrichtung M3 die von der Verzögerungseinrichtung VS4 zugeführten ursprünglichen Pegelwerte mit einem Faktor wenig größer als 1, beispielsweise 1,01, multiplizierte.

Die Niedrigwertextraktionseinrichtung SWSK kann jedoch auch in anderer Weise, beispielsweise wie in FIG 4 dargestellt, realisiert werden : Geht man davon aus, daß die Pegelwerte der eingangs zugeführten Datenfolge d in einem Bereich zwischen 0 und 1 liegen, so werden diese ankommenden Signale durch eine Subtraktionseinrichtung SUB1 von '1' subtrahiert. Die in FIG 4 dargestellte Ausführungsform einer Niedrigwertextraktionseinrichtung SWSK besteht aus dieser ersten Subtraktionseinrichtung SUB1, aus einer Vergleichseinrichtung KOM4, aus einer dritten und vierten Selektoreinrichtung SE3 und SE4, einer fünften Verzögerungseinrichtung V5, einer vierten Multiplikationseinrichtung M4, einer zweiten Zeitsteuerung ZS2 sowie aus einer zweiten Subtraktionseinrichtung SUB2. Da alle auftretenden Pegelwerte von '1' subtrahiert werden, führen die niedrigsten Pegelwerte zu den höchsten Aufnahmeschwellwerten. Es kann daher eine mit der Spitzenwertextraktionseinrichtung SWSG identische schaltungstechnische Realisierung für die Niedrigwertextraktionseinrichtung SWSK gewählt werden. Die Multiplikationseinrichtung M4 und die zweite Zeitsteuerung ZS2 wirken also in gleicher Meise wie die gleichartigen Einrichtungen M3, ZS1 der Spitzenwertexträktionseinrichtung SWSG. Nach der Spitzenwertextraktion werden die gebildeten Werte in der Einrichtung SUB2 wiederum von '1' subtrahiert.

Bezugszeichenliste

| | |
|---|---|
| KA | Kommunikationsnebenstellenanlagen |
| DST | Dezentrale Teilsteuerung |
| VST | Verteilersteuerung |
| ZST | Zentrale Steuereinrichtung |
| P | Speicher |
| VA | Vermittlungssatz |
| VS1...VSn | Vermittlungssätze |
| T1....Tn | Teilnehmerstellen |
| Te | Endgerät |
| OA | Vermittlungsanlage |
| Lg | Leitungsverbindung |
| S | Schnittstelle |
| A | Auswerteinheit |
| ST1, ST2 | Steuereinheiten |
| V1...V5 | Verzögerungseinrichtungen |
| WS | Seriell/Parallelwandlungseinrichtung |
| VN | Einrichtung zur logarithmisch-linearen Kennlinienumsetzung |
| DE · | Einrichtung |
| DET | Spracherkennungseinrichtung |
| VA1, VA2 | Verarbeitungseinheiten |
| SE1, SE2 | Sendeeinheiten |
| EM1, EM2 | Empfangseinheiten |
| SP | Speichereinrichtung |
| UG | Einrichtung zur linear-logarithmischen Kennlinienumsetzung |
| WP | Parallel/Seriellvangseinrichtung |
| HPF | Hochpaßfilter |
| GR | Gleichrichteranordnung |
| TPF | Tiefpaßfilter |

ST3

SBE                         Schwellwertbildungseinrichtung

SWSG                   Erste Spitzenwertextaktionseinrichtung

SWSK                   Zweite Spitzenwertextraktionseinrichtung

BG                          Pegelbegrenzungseinrichtung

M1...M4               Multiplikationseinrichtungen

AW

KOM1, KOM2         Schwellwertvergleichseinrichtungen

ZG1m, ZG2

SS                          Steuerbarer Schalter

SD

UND                       UND-Gatter

SE1...SE4            Selektoreinrichtungen

KOM3, KOM4         Vergleichsschaltungen

ZS1, ZS2              Zeitsteuerungen

d                           Datenfolge

SW1                    Sprachpegelschwellwert (SWSG)

SW2                   Pausenpegelschwellwert (SWSK)

SW3                   Referenzschwellwert (AW)

RW                       Referenzwert (KOM2)

m1...m4               Multiplikationsfaktoren

t10, t11,...         Erste Zeiträume (SWSG)

t20, t21,...         Zweite Zeiträume (SWSH)

J1...J3               Spracherkennungssignale

N1...N3               Pausenerkennungssignale

## Patentansprüche

1. Verfahren zur Unterscheidung von Sprachsignalen von Signalen geräuschfreier oder geräuschbehafteter Sprachpausen in einer Datenfolge mittels eines unter Berücksichtigung von den Sprachpausensignalen entsprechenden Sprachpausenpegeln variierbaren Pegelschwellwertes, wobei jeweils Niedrigwerte der Datenfolge registriert werden und wobei aus jeweils aktuellen Niedrigwert-Aufnahmeschwellwerten durch eine einstellbare Vergrößerung ein erster Pegelregulierungswert (SW2) gewonnen wird, **dadurch gekennzeichnet,** daß nach Aufnahme eines Niedrigwertes entsprechend eingestellte Niedrigwert-Aufnahmeschwelle solange allmählich angehoben wird, bis ein neuer Niedrigwert die Niedrigwert-Aufnahmeschwelle unterschreitet und registriert wird, daß jeweils Spitzenwerte der Datenfolge derart registriert werden, daß nach Aufnahme eines Spitzenwertes eine entsprechend eingestellte Spitzenwert-Aufnahmeschwelle solange allmählich abgesenkt wird, bis ein neuer Spitzenwert die Spitzenwert-Aufnahmeschwelle übersteigt und registriert wird und daß aus den jeweils aktuellen Spitzenwert-Aufnahmeschwellwerten durch eine einstellbare Verringerung ein zweiter

10

Pegelregulierungswert (SW1) gewonnen wird, wobei der erste und zweite Pegelregulierungswert (SW2, SW1) zur Bildung des Pegelschwellwertes (SW3) miteinander addiert werden, oder bei Unterschreiten eines vorgegeben Abstandswertes zwischen den beiden Pegelregulierunsgwerten (SW1, SW2) zur Bildung des Pegelschwellwertes (SW3) der größere der beiden Pegelregulierungswerte (SW1, SW2) als Pegelschwellwert (SW3) festgelegt wird.

2. Verfahren nach Ansprüch 1, **dadurch gekennzeichnet**, daß die Zeitkonstante für die Absenkung der Spitzenwert-Aufnahmeschwelle wenige Sekunden, vorzugsweise 3s bis 5s, und die Zeikonstante für die Anhebung der Niedrigwert-Aufnahmeschelle ein Mehrfaches, vorzugsweise etwa das 6 - 12-fache, beträgt.

3. Anordnung zur Durchführung des Verfahrens nach einem der Ansprüche 1 bis 2, bestehend aus einer Niedrigwert-Extraktionseinrichtung (SWSK), deren Ausgang eine der Erzeugung des ersten Pegelregulierungswertes (SW2) dienende, vorzugsweise als Multiplikationseinrichtung (M2) ausgebildete Verstärkereinrichtung nachgeschaltet ist, **dadurch gekennzeichnet**, daß die Niedrigwert-Extraktionseinrichtung (SWSK) eine Multiplikationseinrichtung (M4) aufweist, die in jeder Pegel-Abtastperiode die Niedrigwert-Aufnahmeschwelle mit einem größer als "1" gewählten Faktor multipliziert, und eine Selektionseinrichtung (SE4) aufweist, die den multiplizierten Pegelwert nur in einem einstellbaren Teil der Abtastperioden als neue Niedrigwert-Aufnahmeschwelle übernimmt, weiterhin bestehend aus einer Spitzenwert-Extraktionseinrichtung (SWSG), die eine Multiplikationseinrichtung (M3) aufweist, die in jeder Pegel-Abtastperiode die Spitzenwert-Aufnahmeschwelle mit einem geringfügig kleiner als "1" gewählten Faktor multipliziert, und eine Selektionseinrichtung (SE2) aufweist, die den multiplizierten Pegelwert nur in einem einstellbaren Teil der Abtastperioden als neue SpitzenwertAufnahmeschwelle übernimmt, wobei dem Ausgang der Spitzenwert-Extraktionseinrichtung (SWSG) eine der Erzeugung des zweiten Pegelregulierungswertes (SW1) dienende, vorzugsweise als Multiplikationseinrichtung (M1) ausgebildete Dämpfungseinrichtung nachgeschaltet ist und die Spitzenwert-Extraktionseinrichtung (SWSG) und die Niedrigwert-Extraktionseinrichtung (SWSK) einander parallel geschaltet und derart ausgebildet sind, daß nur eine aktuelle Spitzenwert-Aufnahmeschwelle überschreitende Sprachpegel bzw. eine aktuelle Niedrigwert-Aufnahmeschwelle unterschreitende Sprachpausenpegel aufgenommen und gespeichert werden und der Ausgang der Dämpfungseinrichtung (M1) bzw. der Verstärkereinrichtung (M2) jeweils an einen Eingang eines Addierwerks (AW) angeschlossen sind, an dessen Ausgand der jeweilige aktuelle Pegelschwellwert (SW3) abgegeben wird.

4. Anordnung nach Anspruch 3, **dadurch gekennzeichnet**, daß zwischen die Niedrigwert-Extraktionseinrichting (SWSK) und die Verstärkereinrichtung (M2) eine Pegelbegrenzungseinrichtung (BG) eingefügt ist.

5. Anordnung nach einem der Ansprüche 3 oder 4, **dadurch gekennzeichnet**, daß die Niedrigwert-Extraktionseinrichtung (SWSK) eine erste Subtrahiereinrichtung (SUB1) aufweist, in der die zugeführten Pegelwerte von einem festen größten Pegelwert subtrahiert werden, daß die Niedrigwert-Aufnahmeschwelle mit einem kleiner als "1" gewählten Faktor multipliziert wird und daß der erste Pegelregulierungswert (SW2) am Ausgang einer zweiten Subtrahiereinrichtung (SUB2) abgegeben wird, in der der aktuelle Pegelwert erneut von demselben festen größten Pegelwert subtrahiert wird.

## Claims

1. Method fot distinguishing speech signals from signals of noise-free or noise-afflicted speech pauses in a data sequence by means of a level threshold value which can be varied, taking into consideration speech pause levels which correspond to the speech pause signals, in which method in each case low values of the data sequence ate registered and a first level control value (SW2) is obtained by an adjustable increase from low-value recording threshold values which ate current in each case, characterised in that after a low value has been recorded, the correspondingly adjusted low-value recording threshold is gradually raised until a new low value drops below the low-value recording threshold and is registeted, in that in each case peak values of the data sequence ate registered in such a manner that after a peak value has been recorded, a correspondingly adjusted peak-value recording threshold is gradually lowered until a new peak value exceeds the peak-value recording threshold and is registered and in that a second level control value (SW1) is obtained by an adjustable reduction from the peak-value recording threshold values which ate current in each case, the first and second level control values (SW2, SW1) being added to one another for forming the level threshold value (SW3), or, when the interval value drops below a predetermined interval value between the two level control values (SW1, SW2) for forming the level threshold value (SW3), the greater one of the two level control values (SW1, SW2) is determined as level threshold value (SW3).

2. Method according to Claim 1, characterised in that the time constant for lowering the peak-value recording threshold is a few seconds, preferably 3s to 5s, and the the constant for raising the low-value recording threshold is a multiple, preferably approxiately 6 - 12-times.

3. Arrangement for carrying out the method according to one of Claims 1 to 2, consisting of a low-value extraction device (SWSK), the output of which is followed by an amplifier device, prefetably constructed as multiplication device (M2), which is used for generating the first level control value (SW2), characterised in that the low-value extraction device (SWSK) exhibits a multiplication device (M4) which multiplies in each level sampling period the low-value recording threshold by a factor selected to be greater than "1", and exhibits a selection device (SE4) which only accepts the multiplied level value as new low-value recording threshold in an adjustable part of the sampling periods, furthermore consisting of a peak-value extraction device (SWSG) which exhibits a multiplication device (M3) which multiplies in each level sampling period the peak-value recording threshold by a factor selected to be slightly less than "1", and exhibits a selection device (SE2) which only accepts the multiplied level value as new peak-value recording threshold in an adjustable part of the sampling periods, the output of the peak-value extraction device (SWSG) being followed by an attenuating device, preferably constructed as multiplication device (M1) and used for generating the second level control value (SW1), and the peak-value extraction device (SWSG) and the low-value extraction device (SWSK) being connected in parallel with one another and being constructed in such a manner that only a speech level exceeding a current peak-value recording threshold or a speech pause level dropping below a current low-value recording threshold ate recorded and stoted and the output of the attenuating device (M1) and of the amplifier device (M2), respectively, is in each case connected to an input of an adding unit (AW), at the output of which the respective current level threshold value (SW3) is emitted.

4. Arrangement according to Claim 3, characterised in that a level limiting device (BG) is inserted between the low-value extraction device (SWSK) and the amplifier device (M2).

5. Arrangement according to one of Claims 3 or 4, characterised in that the low-value extraction device (SWSK) exhibits a first subtracting device (SUB1) in which the supplied level values ate subtracted from a fixed greatest level value, in that the low-value recording threshold is multiplied by a factor selected to be less than "1" and in that the first level control value (SW2) is emitted at the output of a second subtracting device (SUB2) in which the current level value is again subtracted from the same fixed greatest level value.

## Revendications

1. Procédé pour établir une discrimination entre des signaux vocaux et des signaux de pauses de conversation exempts ou affectés de bruits, dans une suite de données, au moyen d'une valeur de seuil de niveau pouvant être modifiée compte tenu de niveaux de pauses de conversation correspondant aux signaux de pause de conversation, et selon lequel respectivement de faibles valeurs de la suite de données sont enregistrées et une première valeur (SW2) de régulation du niveau est obtenue à partir des valeurs de seuil respectivement actuelles de réception de faible niveau, moyennant une amplification réglable, caractérisé par le fait qu'un seuil de réception d'une valeur faible, réglé de façon correspondante après la réception d'une valeur faible, est accru progressivement jusqu'à ce qu'une nouvelle valeur faible tombe au-dessous du seuil de réception d'une valeur faible et soit enregistrée, que des valeurs maximales de la suite de données sont respectivement enregistrées de manière qu'après la réception d'une valeur maximale, un seuil de réception d'une valeur maximale, réglé de façon correspondante, soit réduit progressivement jusqu'à ce qu'une nouvelle valeur maximale dépasse le seuil de réception d'une valeur maximale et soit enregistré, et qu'une seconde valeur (SW1) de régulation du seuil est obtenue moyennant une réduction réglable, à partir des valeurs de seuil respectives actuelles de réception d'une valeur maximale, les première et seconde valeurs (SW2, SW1) de régulation des seuils étant additionnées pour former la valeur (SW3) de seuil du niveau, ou bien, lors du dépassement d'un écart prédéterminé entre les deux valeurs (SW1, SW2) de régulation des seuils, celle des deux valeurs (SW1, SW2) de régulation des seuils, qui est la plus élevée, est déterminée en tant que valeur de seuil de niveaux (SW3), pour la formation de cette valeur.

2. Procédé suivant la revendivation 1, caractérisé par le fait que la constante de temps pour la déduction du seuil de réception d'une valeur maximale est égale à quelques secondes et comprise de préférence entre 3 s et 5 s, et que la constante de temps pour l'accroissement du seuil de réception d'une valeur faible est égal à un multiple et est de préférence supérieur à environ 6 à 12 fois.

3. Montage pour la mise en oeuvre du procédé suivant l'une des revendications 1 et 2, constitué par un dispositif (WKSK) d'extraction d'une valeur faible, en aval de la sortie duquel est branché un dispositif amplificateur utilisé pour produire la première valeur (SW2) de régulation du seuil et agencé de préférence sous la forme d'un dispositif multiplicateur (M2), caractérisé par le fait que le dispositif (SW5K) d'extraction d'une valeur faible comporte un dispositif multiplicateur (M4), qui, pendant chaque période d'échantillonnage du niveau, multiplie le seuil de réception de la valeur faible par un facteur choisi supérieur à "1", et comporte un dispositif de sélection (SE4), qui prend en charge la valeur de niveau multipliée, uniquement dans une partie réglable des

EP 0 238 075 B1

périodes d'échantillonnage en tant que nouveau seuil de réception d'une valeur faible, et comprend en outre un dispositif (SWSG) d'extraction d'une valeur maximale, qui comporte un dispositif multiplicateur (M3), qui, pendant chaque période d'échantillonnage du niveau, multiplie le seuil de réception de la valeur maximale par un facteur choisi légèrement inférieur à "1", et possède un dispositif de sélection (SE2), qui prend en charge la valeur de niveau multipliée, uniquement dans une partie réglable des périodes d'échantillonnage en tant que nouveau seuil de réception d'une valeur maximale, auquel cas à la sortie du dispositif (SWSG) d'extraction d'une valeur maximale est branché un dispositif d'affaiblissement, qui sert à produire la seconde valeur (SW1) de régulation du niveau et est agencé de préférence sous la forme d'un dispositif multiplicateur (M1), le dispositif (SWSG) d'extraction d'une valeur maximale et le dispositif (SW1) d'extraction d'une valeur faible étant branchés en parallèle et agencés de telle sorte que seul un niveau vocal, qui dépasse un seuil réel de réception d'une valeur maximale, et un niveau de pause de conversation, qui tombe au-dessous d'un seuil réel de réception d'une valeur faible, sont acceptés et mémorisés, tandis que la sortie du dispositif d'affaiblissement (M1) et la sortie du dispositif amplificateur (M2) sont raccordées respectivement à une entrée d'un additionneur (AW), dont la sortie délivre la valeur actuelle respective de seuil (SW3) du niveau.

4. Dispositif suivant la revendication 3, caractérisé par le fait qu'un dispositif (BG) de limitation du niveau est inséré entre le dispositif (SWSK) d'extraction d'une valeur faible et le dispositif amplificateur (M2).

5. Dispositif suivant l'une des revendivations 3 ou 4, caractérisé par le fait que le dispositif (SWSK) d'extraction d'une valeur faible possède un premier dispositif soustracteur (SUB1), dans lequel les valeurs de seuil envoyées sont soustraites d'une valeur maximale fixe de niveau, que le seuil de réception de la valeur faible est multiplié par un facteur choisi inférieur à "1" et que la première valeur (SW2) de régulation du niveau est délivrée à la sortie d'un second dispositif soustracteur (SUB2), dans lequel la valeur actuelle du niveau est à nouveau soustraite de la même valeur maximale fixe de niveau.

13

FIG 1

# FIG 2

EP 0 238 075 B1

FIG 3

# FIG 4

EP 0 238 075 B1